(19) Europäisches Patentamt
European Patent Office
Office européen des brevets

(11) **EP 3 667 395 B1**

(12) **FASCICULE DE BREVET EUROPEEN**

(45) Date de publication et mention
de la délivrance du brevet:
**06.10.2021 Bulletin 2021/40**

(51) Int Cl.:
**G02B 27/00** *(2006.01)* **G02B 17/06** *(2006.01)*

(21) Numéro de dépôt: **19215037.3**

(22) Date de dépôt: **10.12.2019**

(54) **TÉLESCOPE ANASTIGMATE BI-SPECTRAL**

BISPEKTRALES ANASTIGMATES TELESKOP

BI-SPECTRAL ANASTIGMATIC TELESCOPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2018 FR 1872518**

(43) Date de publication de la demande:
**17.06.2020 Bulletin 2020/25**

(73) Titulaire: **Thales**
**92400 Courbevoie (FR)**

(72) Inventeur: **TETAZ, Nicolas**
**06156 CANNES LA BOCCA (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 3 096 169    EP-A1- 3 404 463**

## Description

**DOMAINE DE L'INVENTION**

Le domaine de l'invention est celui des télescopes, notamment celui des télescopes d'observations embarqués dans des satellites. Plus précisément, le domaine de l'invention concerne les systèmes catoptriques à grandes focales présentant deux voies, une voie visible et une voie infrarouge

**ETAT DE LA TECHNIQUE**

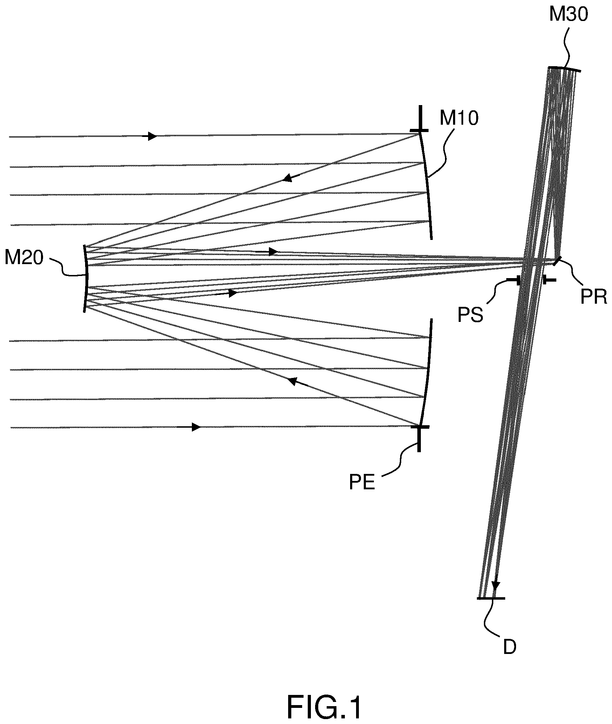

Un type de télescope spatial à haute résolution fonctionnant dans le visible connu est le télescope de type Korsh illustré figure 1. Le télescope de type Korsh, également dénommé TMA (acronyme de l'expression anglo-saxonne « Three Mirors Anastigmat ») est un télescope anastigmat à trois miroirs asphériques (soit de type Concave-Convexe-Concave) qui comprend au moins un premier miroir M1o concave, un second miroir M2o convexe et un troisième miroir M3o concave. Les premier, deuxième et troisième miroirs M1o, M2o et M3o sont asphériques, de formes fixes, chaque miroir étant caractérisé par au moins deux paramètres, un rayon de courbure R et une conique c.

Ce système optique présente une pupille d'entrée PE, un axe optique O défini par le rayon passant par le centre de la pupille d'entrée PE et perpendiculaire à cette pupille, la pupille d'entrée étant généralement disposée au niveau du premier miroir et une pupille de sortie PS. Ces notions sont bien connues de l'homme de l'art.

Les trois miroirs M1o, M2o et M3o sont agencés de sorte que le premier miroir et le second miroir forment d'un objet à l'infini une image intermédiaire située entre le second miroir et le troisième miroir, le troisième miroir formant de cette image intermédiaire une image finale dans le plan focal du télescope dans lequel est placé un détecteur D. Par application des équations de Korsch bien connues de l'homme de l'art on calcule aisément les positions et paramètres respectifs des trois miroirs. La solution théorique est de très bonne qualité, ce qui fait tout l'intérêt de ce type de télescope. Typiquement les télescopes de type Korsch présentent un champ de vue compris entre 0 et 3° et des focales de plusieurs mètres, typiquement de 3m à 40 m.

La solution théorique est calculée sur l'axe, c'est-à-dire que le rayon central/moyen du champ de vue est confondu avec l'axe optique et ne tient pas compte de l'encombrement physique des miroirs. Pour que la lumière puisse passer dans la combinaison, classiquement on s'arrange pour que le télescope fonctionne légèrement hors d'axe (ou « off axis » selon la terminologie de l'homme de l'art), c'est-à-dire que le rayon moyen du champ de vue du télescope ne coïncide plus avec l'axe optique (typiquement le hors d'axe est d'environ 0.5°). Cet off axis est compensé dans le design final du télescope.

L'espace entre M1o et M2o est dénommé cavité avant et l'espace derrière M1o est dénommé cavité arrière du télescope. Pour des problèmes d'encombrement un miroir de renvoi MR est très souvent utilisé pour replier la cavité arrière tel qu'illustré figure 1

La qualité d'un système optique s'évalue par comparaison entre l'onde lumineuse idéale limitée par la diffraction et l'onde lumineuse réelle à la sortie du système optique tenant compte des défauts du système optique traversé. L'analyse de la différence entre onde théorique et onde réelle permet d'identifier les types de défauts ou aberrations du système optique.

Il est connu que les principales aberrations géométriques sont: l'aberration sphérique, l'astigmatisme, la coma, la courbure de champ (defocus dans le champ) et la distorsion.

Des polynômes, et plus particulièrement les polynômes de Zernike, sont classiquement utilisés pour qualifier plus facilement les différents types d'aberrations d'un front d'onde (soit une surface) à la sortie d'un système optique.

Les surfaces de Zernike sont les plus couramment utilisées. Une surface de Zernike est définie en coordonnées polaires dans un espace $(\rho, \theta, z)$, et si $z(\rho, \theta)$ représente la coordonnée z **d**'un point de cette surface, on a la relation

[Math 1]

$$z(\rho,\theta) = \frac{c(\rho^2)}{1 + \sqrt{1 - (1+k)c^2\rho^2}} + \sum C_j Z_j$$

$Z_j$ étant un polynôme de Zernike d'ordre j et $C_j$ étant la constante associée à ce polynôme, j étant un indice variant respectivement entre 0 et un nombre entier, k étant la constante de conicité et c la courbure de la surface.

Une surface quelconque décomposée suivant des polynômes est dénommée surface φ-polynomiale. Cette surface est donc caractérisée par des valeurs des coefficients de ces polynômes.

L'intérêt de la décomposition de front d'onde en polynômes de Zernicke orthogonaux est que chaque polynôme de la base considérée correspond à une catégorie d'aberration différente. Il est alors possible de connaître la nature des aberrations présentes dans un front d'onde.

Le tableau 1 ci-dessous illustre les différents polynômes « Fringe Zernike » en fonction de leur ordre (ici 1 à 16), ainsi que le type l'aberration correspondant.

[Tableaux 1]

| Ordre | Polynôme | Aberration (s) |
|---|---|---|
| 1 | 1 | Piston |
| 2 | $\rho \, Cos[\theta]$ | Inclinaison en x |
| 3 | $\rho \, Sin[\theta]$ | Inclinaison en y |
| 4 | $-1 + 2\rho^2$ | Focalisation |
| 5 | $\rho^2 \, Cos[2\theta]$ | Astigmatisme à 0° |
| 6 | $\rho^2 \, Sin[2\theta]$ | Astigmatisme à 45° |
| 7 | $\rho \, (-2 + 3\rho^2) \, Cos[\theta]$ | Coma en x |
| 8 | $\rho \, (-2 + 3\rho^2) \, Sin[\theta]$ | Coma en y |
| 9 | $1 - 6\rho^2 + 6\rho^4$ | Sphéricité et focalisation |
| 10 | $\rho^3 \, Cos[3\theta]$ | Tri feuille |
| 11 | $\rho^3 \, Sin[3\theta]$ | Tri feuille |
| 12 | $\rho^2 \, (-3 + 4\rho^2) \, Cos[2\theta]$ | Astigmatisme ordre 2 |
| 13 | $\rho^2 \, (-3 + 4\rho^2) \, Sin[2\theta]$ | Astigmatisme ordre 2 |
| 14 | $\rho \, (3 - 12\rho^2 + 10\rho^4) \, Cos[\theta]$ | Coma en x ordre 2 |
| 15 | $\rho \, (3 - 12\rho^2 + 10\rho^4) \, Sin[\theta]$ | Coma en y ordre 2 |
| 16 | $-1 + 12\rho^2 - 30\rho^4 + 20\rho^6$ | Sphéricité ordre 2 |

En adoptant la définition des polynômes de Fringe Zernike, les différents types d'aberration correspondent à :

- le focus correspond au terme Z4,
- l'astigmatisme correspond aux termes Z5 et Z6,
- la coma aux termes Z7 et Z8 et
- l'aberration sphérique de premier ordre à Z9,
- l'aberration sphérique de deuxième ordre à Z16

Une surface asphérique est une surface non sphérique mais qui présente une symétrie de révolution.

Une surface optique quelconque, sans symétrie, est dénommée « free form », ou $\varphi$-polynomiale lorsqu'elle est décomposée selon une famille de polynômes. Par exemple une surface calculée pour compenser l'astigmatisme et/ou la coma est « free form », ces aberrations ne présentant pas de symétrie de révolution.

Pour ces télescopes haute résolution fonctionnant dans le visible, il est aujourd'hui demandé d'ajouter une voie infra-rouge (IR). Cette voir IR doit comporter plusieurs bandes spectrales (SWIR, MWIR, LWIR).

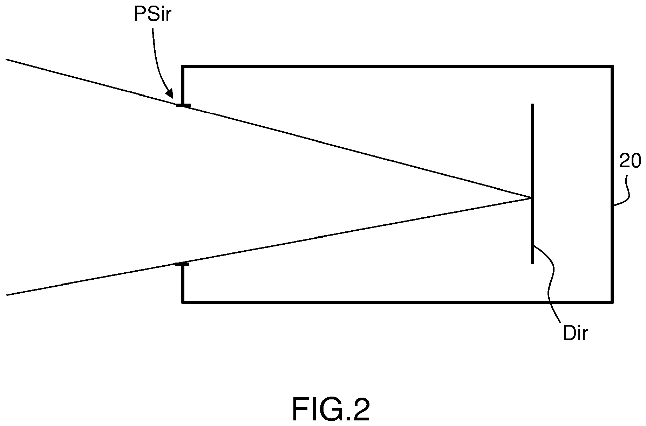

Pour ces télescopes haute résolution fonctionnant dans le visible, il est aujourd'hui demandé d'ajouter une voie infra-rouge (IR). Un certain nombre de contraintes pèsent sur cette voir IR additionnelle. Cette voie IR doit comporter plusieurs bandes spectrales (SWIR, MWIR, LWIR), ce qui implique l'achromatisation de la voir IR sur une très large bande spectrale. Par ailleurs le détecteur infrarouge Dir doit être refroidi (typiquement à 77K), en étant disposé dans un cryostat ou baffle. Dans l'infra-rouge, tout corps chaud rayonne, ce qui est source de lumière parasite et le détecteur Dir doit donc être entouré de corps froids. La pupille de sortie PSir de la voir IR du télescope doit être réelle et froide, donc intégrée au cryostat 20 comme illustré figure 2. Ceci implique que la distance PSir-PFir, avec PDir plan focal de la voir IR dans lequel est positionné le détecteur Dir, doit être minimisée afin de réduire la complexité et le coût du système de refroidissement du télescope. On cherche à obtenir une distance PSir-PFir inférieure à 100 mm, préférentiellement inférieure à 40 mm. En outre la voir IR doit être la plus compacte possible pour éviter d'augmenter le volume et le poids de l'instrument. Le nombre d'optique à rajouter doit être le plus faible possible pour réduire les coûts et les difficultés d'intégration.

Une première solution de l'état de l'art consiste à ré-imager la pupille de sortie du télescope avec des optiques dioptriques. La voie IR est séparée de la voie visible, (dénommée VIS) par un composant dichroïque (séparation spectrale) ou par un angle moyen (off-axis) différent de la voie VIS (séparation spatiale); le plan focal PFir est réimagé par un miroir supplémentaire et un groupe de lentilles. Dans ce cas la pupille de sorite PSir peut être placée proche de plan focal PFir. Cette solution présente un encombrement important, un nombre important d'optiques supplémentaires et une achromatisation limitée du fait de l'utilisation d'un groupe de lentilles.

Une deuxième solution consiste à ré-imager la pupille de sortie du télescope avec des optiques catadioptriques. La voie IR est séparée de la voie VIS par un composant dichroïque ou par un angle moyen (off-axis) différent de la voie VIS; le plan focal PFir est réimagé par deux miroirs paraboliques collimatés, ce qui résout la contrainte de l'achromatisme sur toute la bande IR. Cette solution présente cependant un encombrement important, la pupille de sortie ne peut être placée proche du plan focal, et nécessite l'ajout de deux miroirs.

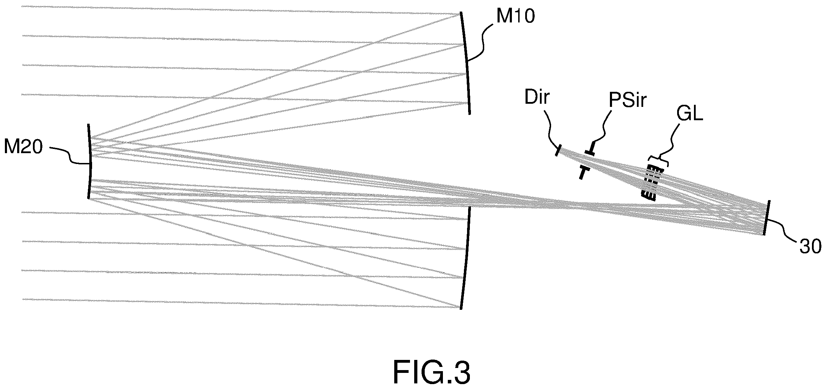

Une troisième solution consiste à réaliser une voir IR comprenant un miroir 30 spécifique à la voir IR, en combinaison avec M1o et M2o commun à la voie visible et un groupe de lentilles GL (typiquement 5 à 7 lentilles). La voie IR de cette solution est illustrée figure 3. La voie visible est du type de celle illustrée figure 1, mais les rayons et composants correspondant à la voie visible ne sont pas représentés sur la figure 3 pour plus de clarté. Ce système a pour avantage que la pupille de sortie IR PSir peut être positionnée proche du détecteur Dir (solution compact). Cependant l'utilisation d'un groupe de lentilles GL limite la bande spectrale, ce groupe GL est difficile à calculer et à réaliser, et également très difficile à tester/régler. En effet cet ensemble de lentilles compense également des aberrations présentes dans la combinaison IR du télescope et ne peut donc pas être testé de manière isolée. Typiquement ce bloc est fabriqué par un sous-traitant et testé chez ce sous-traitant à l'aide d'un simulateur de télescope. Ce mode opératoire est très lourd à mettre en œuvre et augmente sensiblement le coût de la voire IR.

Le document EP404463 décrit un télescope anastigmate bifocal à cinq miroirs fonctionnant dans le visible, dans lequel une voie infrarouge est intégrée et peut se substituer à la voie visible. Le document EP3096169 décrit un télescope anastigmat à trois miroirs monospectral.

Un but de la présente invention est de remédier aux inconvénients précités en proposant un télescope anastigmate bi-spectral (visible et IR) large bande et compact avec une voie IR facile à fabriquer et à régler, et présentant une pupille de sortie proche du détecteur.

## DESCRIPTION DE L'INVENTION

La présente invention a pour objet un télescope anastigmate bi-spectral de type Korsh tel que défini dans les revendications.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

[Fig.1] La figure 1 déjà citée décrit le schéma d'un télescope TMA.

[Fig.2] La figure 2 déjà citée illustre un détecteur IR à l'intérieur d'un cryostat.

[Fig.3] La figure 3 déjà citée décrit la voie IR d'un télescope bi-spectral selon l'état de l'art.

[Fig.4] La figure 4 illustre une première variante de la voie IR du télescope selon l'invention.

[Fig.5] La figure 5 illustre un télescope bi spectral selon l'invention.

[Fig.6] La figure 6 illustre une deuxième variante de la voie IR du télescope selon l'invention.

Par souci de clarté les mêmes éléments porteront les mêmes repères dans les différentes figures.

## DESCRIPTION DETAILLEE DE L'INVENTION

L'objet de l'invention est un télescope 10 anastigmate de type Korsh bi-spectral, qui présente une voie visible et une voie infrarouge. La voie visible est classique ou proche de la combinaison classique. Elle comprend trois miroirs asphériques, un premier miroir M1 concave, un second miroir M2 convexe et un troisième miroir M3 concave et un détecteur visible D sensible dans la bande visible, les miroirs étant agencés de sorte que le premier miroir M1 et le second miroir M2 forment d'un objet à l'infini une image intermédiaire située entre le second miroir et le troisième miroir, le troisième miroir M3 formant de cette image intermédiaire une image finale dans le plan focal visible PFdu télescope dans lequel est placé le détecteur visible D.

Préférentiellement les miroirs M1, M2 et M3 sont asphériques. Mais comme expliqué plus loin, d'autres combinaisons sont possibles avec au moins un miroir parmi ces trois miroirs de type « free form ».

La voie infrarouge du télescope selon l'invention comprend M1 et M2 en commun avec la voie visible, un troisième miroir IR M3ir, un quatrième miroir IR M4ir, et un détecteur IR Dir sensible dans une bande infrarouge, le troisième et le quatrième miroir IR étant configurés pour former de ladite image intermédiaire une image finale dans un plan focal IR PFir du télescope dans lequel est placé le détecteur IR Dir.

Le télescope selon l'invention ne contient que des miroirs dans sa combinaison optique qui peuvent être réglés chacun indépendamment. Le télescope se fabrique par une intégration classique de télescope à miroir. De plus cette solution entièrement réflective ne présente pas de problème de chromatisme et peut donc fonctionner dans n'importe quelle bande (IR ou VIS). La pupille n'est pas réimagée, le télescope selon l'invention est donc compact.

Pour obtenir un télescope présentant une bonne qualité d'image sur les deux voies uniquement à partir de miroirs, les formes et positions du troisième et du quatrième miroir IR sont déterminées à partir des équations de Korch généralisées à 4 miroirs, avec la contrainte du M1 et du M2 communs avec la voie visible.

Le calcul de la combinaison optique de la voie IR du télescope10 selon l'invention est issu de l'application des équations de Korsch généralisées à n miroirs avec n=4. Dans son livre « Reflective Optics » D. Korsch présente un formalisme mathématique permettant dans des systèmes multi-miroirs d'exprimer les principales aberrations optiques (Aberration sphérique, coma, astigmatisme, courbure de champ) en fonction de paramètres simples tels que la distance entre les miroirs, la distance des objets et des images et le ratio des hauteurs des rayons. Ce formalisme simple et efficace permet de trouver des systèmes multi-miroirs aplanétique et anastigmat en résolvant quelques équations.

L'obtention d'une combinaison performante à la fois sur la voie visible et la voie infrarouge nécessite une optimisation en plusieurs étapes.

On calcule d'abord dans une première étape une combinaison optique de la voie visible du télescope10 par l'application des équations de Korsch classiques à trois miroirs à partir des paramètres prédéterminés souhaités pour l'application visée: focale visible F, champ de vue, dimension de la pupille entrée et contrainte sur le volume.

L'optimisation est réalisée de manière classique à l'aide de logiciels de calcul optique (CodeV, Zemax, Oslo,...). Ces logiciels fonctionnent sur le principe de la minimisation d'une fonction d'erreur. Typiquement la fonction d'erreur inclut la qualité image au plan focal selon un critère prédéterminé. Le critère prédéterminé consiste par exemple à minimiser d'une erreur de forme d'onde ou WFE pour « Wave Front Error » en anglais, moyennée sur une pluralité de points du champ, bien connu de l'homme de l'art. Typiquement on cherche à minimiser la valeur quadratique moyenne ou WFE RMS.

Une combinaison solution se caractérise par les distances M1/M2, M2/M3 et M3/PF et les rayons de courbure R1, R2, R3 et coniques C1, C2, C3 de respectivement M1, M2 et M3.

Ces équations Korsch à 3 miroirs donnent un ensemble de solution et une de ces solutions est choisie arbitrairement comme un point de départ pour la voie visible (solution visible initiale) en tenant compte également des contraintes mécaniques.

La combinaison finale, intégrant la voie visible M1/M2/M3 et la voie IR M1/M2/M3ir/M4ir est obtenue par une optimisation conjointe des deux voies.

L'optimisation est conjointe, c'est-à-dire qu'elle ne s'effectue pas uniquement sur les miroirs M3ir et M4ir (à base des équations généralisée à n=4), en prenant M1 et M2 de la solution visible initiale. Un relâchement des contraintes sur au moins un paramètre du M1 et du M2 de la solution visible initiale (choisi parmi la position, le rayon de courbure , la conique) est nécessaire pour converger vers une solution de haute qualité Visible et IR. En d'autres termes les miroirs M1/M2 finaux ne sont pas exactement identiques (mais proches) à ceux déterminés par le calcul classique dans le visible et choisis arbitrairement comme de point de départ (solution visible initiale) parmi l'ensemble de solutions possibles. L'optimisation conjointe permet d'identifier, parmi l'ensemble de solutions déterminées à la première étape, la combinaison visible la meilleure pour la voie IR.

Pour le calcul de la voie IR, les paramètres prédéterminés sont la focale IR Fir, le champ de vue IR et le cas échéant la distance pupille de sortie IR/ détecteur IR (voir plus loin).

Ainsi la voie visible M1/M2/M3 vérifie les équations de Korsch à 3 miroirs, la voie infrarouge M1/M2/M3ir/M4ir vérifie les équations de Korsch généralisées à 4 miroirs, les caractéristiques des miroirs M1/M2 communs aux deux voies sont déterminés par optimisation conjointe des deux voies, typiquement à partir d'une solution visible initiale.

Comme expliqué plus haut les solutions aux équations de Korsch sont calculées sur l'axe (valable pour 3 et 4 miroirs). Comme expliqué plus haut une telle solution n'est pas compatible avec le passage de la lumière et avec les contraintes mécaniques d'encombrement des miroirs.

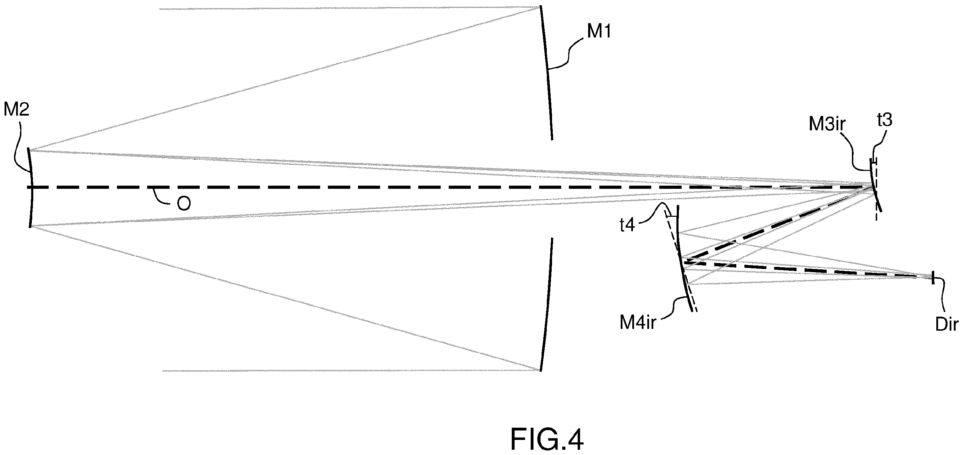

Pour remédier à cela pour la voie IR dans une première variante préférée les troisième et quatrième miroirs M3ir et M4ir présentent chacun un angle d'inclinaison respectif t3, t4 non nul par apport à l'axe optique O. Un exemple de schéma de première variante est illustrée figure 4 (seule la voir IR du télescope est représentée pour plus de clarté). Le basculement de M3ir et M4ir permet de « laisser passer » les rayons lumineux, mais entraîne des aberrations qui dégradent la qualité d'image. M3ir et M4ir sont donc en outre configurés pour compenser ces aberrations introduites par les angles d'inclinaison t3 et t4.

Les miroirs M3ir et M4ir calculés par les équations de Korsch sont initialement asphériques. Mais les aberrations introduites par l'inclinaison de M3ir et M4ir comprennent au moins l'astigmatisme (Z5, Z6) et la coma (Z7, Z8). Pour compenser ce type d'aberration il est alors nécessaire que M3ir et M4IR présentent chacun une surface « free form ». Les valeurs des angles d'inclinaison t3 et t4 sont donc choisis d'une part pour permettre à la lumière de passer et d'autre part de sorte que les aberrations apportées par chacun des tilts soient compensables par l'ajout d'une composante « free form » sur les surfaces asphériques de M3ir et M4ir. Pour certaines configurations il peut s'avérer nécessaire de basculer légèrement le plan focal. Typiquement chacun des angles t3 et t4 est compris entre 3° et 45°.

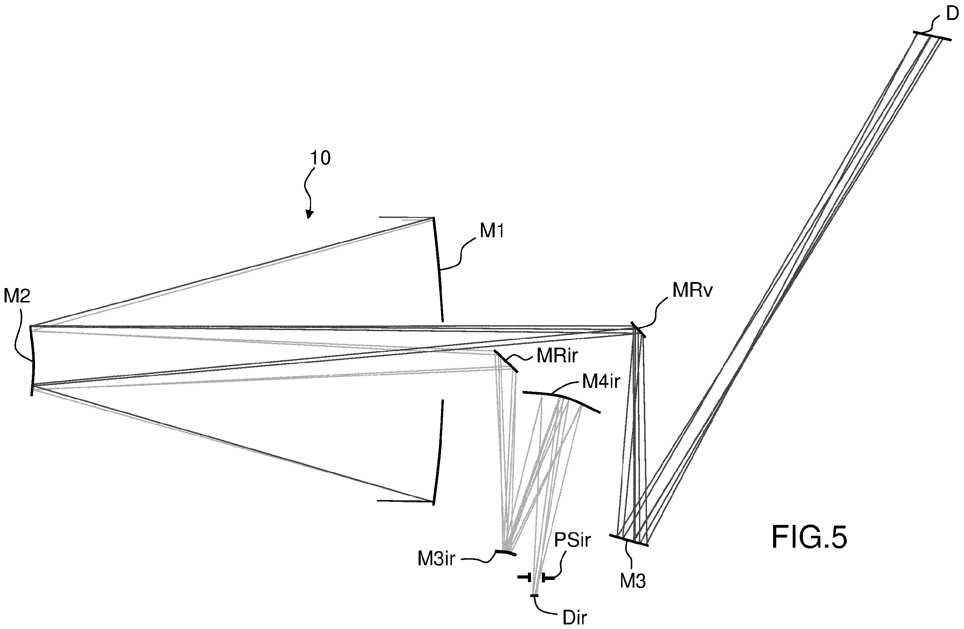

La figure 5 illustre un télescope 10 selon l'invention avec les deux voies. Dans l'exemple de la figure 5 la séparation des deux voies est spatiale, c'est-à-dire que les deux voies présentent des champs de vue différents. La voie visible fonctionne légèrement hors d'axe (c'est-à-dire que le champ moyen est différent de l'axe optique) alors que la voir IR fonctionne ici sur l'axe (le champ moyen est confondu avec l'axe optique) avec des miroirs M3ir et M4ir inclinés. C'est cette différence dans l'axe/hors d'axe qui permet la séparation spatiale des deux voies après le deuxième miroir.

Selon un mode de réalisation de cette première variante le télescope selon l'invention comprend une autre voie visible présentant M1 et M2 en commun avec la voie visible initiale et la voie IR, un troisième miroir additionnel différent du M3 de la voie visible initiale mais présentant des caractéristiques identiques à celui-ci et un détecteur visible additionnel. Préférentiellement les deux voies visibles présentent un off-axis de champ symétrique par rapport à l'axe optique, c'est-à-dire que l'off axis de champ d'une voie visible est symétrique à l'off axis de l'autre voie par rapport à O, typiquement environ 0.5 ° pour l'une et -0.5° pour l'autre. Les deux voies visibles fonctionnent en stéréo. Ce fonctionnement stéréo permet d'obtenir deux images d'une même scène sous 2 angles différents, ce qui permet de reconstruire une vue de la scène en 3 dimensions. Un télescope de type Korsch présentant deux voies visibles avec un off-axis de champ symétrique par rapport à l'axe optique est connu de l'homme de l'art.

De manière classique au moins un miroir de renvoi MRv sur la voie visible et un miroir de renvoi MRir sur la voir IR permettent de replier la cavité arrière pour réduire l'encombrement.

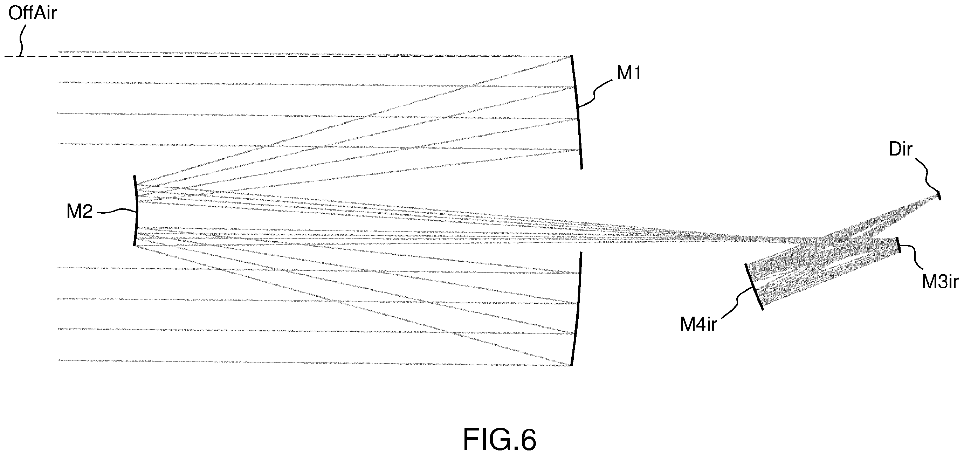

Selon une deuxième variante illustrée figure 6, pour remédier au fait que la solution sur l'axe n'est pas compatible avec le passage de la lumière et avec les contraintes mécaniques d'encombrement des miroirs, la voie infrarouge est configurée de sorte qu'elle présente également un off-axis de champ OffAir. Typiquement cet off-axis de champ est compris entre 0.2° et 2°. Il s'agit ici du même type de solution que ce qui est réalisé classiquement pour la voie visible. L'off axis de champ de la voie visible et l'off axis de champ de la voie IR doivent alors être différents pour pouvoir opérer une séparation spatiale des deux voies.

On compense cet off axis OffAir dans la combinaison optique de la voie IR en modifiant M3ir et M4ir. Les aberrations introduites par ce fonctionnement légèrement hors d'axe sont compensables avec des optiques asphériques. Ainsi dans ce cas on modifie très légèrement les paramètres des miroirs asphériques M3ir et M4ir (rayon de courbure et/ou conicité) sans introduire de composante « free form ».

Selon une troisième variante les voies VIS et IR fonctionnent sur l'axe, avec au moins minimum M3 (voie visible) incliné et présentant une surface « free form ».

Selon encore une autre variante les miroirs M1 et M2 sont inclinés et présentent une surface «free form», de manière à réaliser un télescope présentant un plus grand champ et à supprimer l'obturation centrale, comme décrit dans le document EP3096169.

Selon un mode de réalisation préféré le troisième miroir M3ir est convexe et le quatrième miroir M4ir est concave.

Selon un mode de réalisation, dans les contraintes imposées lors du calcul des combinaisons optique, la position et les paramètres des miroirs M3ir, M4ir sont en outre déterminés de sorte que la distance entre ladite pupille de sortie PSir de la voie IR de la voir infrarouge et le détecteur IR Dir soit faible tel qu'illustré figure 5. On recherche la plus petite distance possible compte tenu de l'application visée et de l'encombrement du télescope associé. Typiquement cette distance est choisie inférieure à la valeur de la focale IR Fir divisée par 10, préférentiellement par 100.

Selon une autre variante, on effectue une séparation spectrale des voies avec un composant dichroïque. Dans ce cas les champs moyens respectifs des voies VIS et IR doivent être quasi identiques.

## Revendications

1. Télescope (10) anastigmate bi-spectral de type Korsh présentant un axe optique (O) et comprenant :

    - une voie visible comprenant trois miroirs, un premier miroir (M1) concave, un second miroir (M2) convexe et un troisième miroir (M3) concave et un détecteur visible (D) sensible dans une bande visible, les miroirs étant agencés de sorte que le premier miroir (M1) et le second miroir (M2) forment d'un objet à l'infini une image intermédiaire située entre le second miroir et le troisième miroir, le troisième miroir (M3) formant de cette image intermédiaire une image finale dans le plan focal visible (PF) du télescope dans lequel est placé le détecteur visible (D),

- une voie infrarouge comprenant le premier et le deuxième miroir en commun avec la voie visible, un troisième miroir IR (M3ir), un quatrième miroir IR (M4ir), et un détecteur IR (Dir) sensible dans une bande infrarouge, le troisième et le quatrième miroir IR étant configurés pour former de ladite image intermédiaire une image finale dans un plan focal IR (PFir) du télescope dans lequel est placé le détecteur IR (Dir), les formes et positions du troisième et du quatrième miroir IR étant déterminées à partir des équations de Korch généralisées à 4 miroirs avec la contrainte du premier et du deuxième miroir (M1, M2) communs avec la voie visible,

le télescope étant apte à réaliser simultanément une image visible sur le détecteur visible et une image infrarouge sur le détecteur IR.

2. Télescope selon la revendication 1 dans lequel les troisième et quatrième miroirs IR présentent chacun un angle d'inclinaison (t3, t4) non nul par apport à l'axe optique (O), les troisième et quatrième miroirs étant en outre configurés pour compenser des aberrations introduites par lesdits angles d'inclinaison.

3. Télescope selon la revendication 2 dans lequel les aberrations introduites par ladite inclinaison comprennent au moins l'astigmatisme et la coma.

4. Télescope selon l'une des revendications 2 ou 3 dans lequel ledit ange d'inclinaison (t3, t4) de chacun des troisième et quatrième miroirs est compris entre 3° et 45°.

5. Télescope selon l'une des revendications 2 à 4 comprenant une autre voie visible présentant le premier et le deuxième miroir en commun avec la voie visible initiale, un troisième miroir additionnel présentant des caractéristiques identiques à celles du troisième miroir de la voie visible initiale et un détecteur visible additionnel, les deux voies visibles présentant un off-axis de champ symétrique par rapport à l'axe optique.

6. Télescope selon la revendication 1 dans lequel la voie infrarouge est en outre configurée pour présenter un off-axis de champ (OffAir).

7. Télescope selon la revendication 6 dans lequel ledit off-axis de champ est compris entre 0.2° et 2°.

8. Télescope selon l'une des revendications précédentes dans lequel le troisième miroir est convexe et le quatrième miroir est concave.

9. Télescope selon l'une des revendications précédentes dans lequel la voie infrarouge présente une focal IR (Fir) et une pupille de sortie (PSir) et dans lequel les troisième et quatrième miroirs (M3ir, M4ir) sont en outre déterminés de sorte que la distance entre ladite pupille de sortie (PSir) de la voie infrarouge et le détecteur IR (Dir) est inférieure à ladite focale IR (Fir) divisée par 10.

**Patentansprüche**

1. Bispektrales, anastigmatisches Teleskop (10) vom Typ Korsch, welches eine optische Achse (O) aufweist und Folgendes umfasst:

- einen sichtbaren Kanal, welcher drei Spiegel umfasst, einen ersten konkaven Spiegel (M1), einen zweiten konvexen Spiegel (M2) und einen dritten konkaven Spiegel (M3) und einen sichtbaren Detektor (D), welche in einem sichtbaren Band empfindlich ist, wobei die Spiegel so angeordnet sind, dass der erste Spiegel (M1) und der zweite Spiegel (M2) von einem Objekt unendlich ein Zwischenbild erzeugen, welches zwischen dem zweiten Spiegel und dem dritten Spiegel befindlich ist, wobei der dritte Spiegel (M3) aus diesem Zwischenbild ein endgültiges Bild in der sichtbaren Brennebene (PF) des Teleskops bildet, in welcher der sichtbare Detektor (D) platziert ist,

- einen Infrarotkanal, welcher den ersten und den zweiten Spiegel gemeinsam mit dem sichtbaren Kanal umfasst, einen dritten IR-Spiegel (M3ir), einen vierten IR-Spiegel (M4ir) und einen IR-Detektor (Dir) umfasst, welcher in einem Infrarotband empfindlich ist, wobei der dritte und der vierte IR-Spiegel konfiguriert sind, um aus dem Zwischenbild ein endgültiges Bild in einer IR-Brennebene (PFir) des Teleskops zu erzeugen, in welcher der IR-Detektor (Dir) platziert ist, wobei die Formen und Positionen des dritten und des vierten IR-Spiegels anhand von generalisierten Korsch-Gleichungen mit 4 Spiegeln mit dem Constraint des mit dem sichtbaren Kanal gemeinsamen ersten und zweiten Spiegels (M1, M2) bestimmt werden,,

wobei das Teleskop in der Lage ist, gleichzeitig ein sichtbares Bild an dem sichtbaren Detektor und ein Infrarotbild an dem IR-Detektor zu erzeugen.

2. Teleskop nach Anspruch 1, wobei der dritte und der vierte IR-Spiegel jeweils einen Neigungswinkel (t3, t4) ungleich null in Bezug auf die optische Achse (O) aufweisen, wobei der dritte und der vierte Spiegel ferner konfiguriert sind, um durch die Neigungswinkel eingebrachte Aberrationen zu kompensieren.

3. Teleskop nach Anspruch 2, wobei die durch die Neigung eingebrachten Aberrationen mindestens den Astigmatismus und die Koma umfassen.

4. Teleskop nach einem der Ansprüche 2 oder 3, wobei der Neigungswinkel (t3, t4) eines jeden des dritten und des vierten Spiegels zwischen 3° und 45° beträgt.

5. Teleskop nach einem der Ansprüche 2 bis 4, umfassend einen weiteren sichtbaren Kanal, welcher den ersten und den zweiten Spiegel gemeinsam mit dem anfänglichen sichtbaren Kanal umfasst, wobei ein dritter zusätzlicher Spiegel identische Merkmale mit denjenigen des dritten Spiegels des anfänglichen sichtbaren Kanals aufweist, und einen zusätzlichen sichtbaren Detektor, wobei die beiden sichtbaren Kanäle eine Feld-Off-axis aufweisen, welche zur optischen Achse symmetrisch ist.

6. Teleskop nach Anspruch 1, wobei der Infrarotkanal ferner konfiguriert ist, um eine Feld-Off-axis (OffAir) aufzuweisen.

7. Teleskop nach Anspruch 6, wobei die Feld-Off-axis zwischen 0,2° und 2° beträgt.

8. Teleskop nach einem der vorhergehenden Ansprüche, wobei der dritte Spiegel konvex ist und der vierte Spiegel konkav ist.

9. Teleskop nach einem der vorhergehenden Ansprüche, wobei der Infrarotkanal eine IR-Brennweite (Fir) und eine Ausgangspupille (PSir) aufweist und wobei der dritte und der vierte Spiegel (M3ir, M4ir) ferner so bestimmt sind, dass der Abstand zwischen der Ausgangspupille (PSir) des Infrarotkanals und dem IR-Detektor (Dir) die IR-Brennweite (Fir), geteilt durch 10, unterschreitet.

## Claims

1. Bi-spectral Korsch-type anastigmat telescope (10) having an optical axis (O) and comprising:

   - a visible channel comprising three mirrors, a concave first mirror (M1), a convex second mirror (M2) and a concave third mirror (M3) and a visible detector (D) that is sensitive in a visible band, the mirrors being arranged so that the first mirror (M1) and the second mirror (M2) form, of an object at infinity, an intermediate image located between the second mirror and the third mirror, the third mirror (M3) forming, from this intermediate image, a final image in the visible focal plane (PF) of the telescope, in which the visible detector (D) is placed,
   - an infrared channel comprising the first and second mirrors in common with the visible channel, a third IR mirror (M3ir), a fourth IR mirror (M4ir), and an IR detector (Dir) that is sensitive in an infrared band, the third and fourth IR mirrors being configured to form, from said intermediate image, a final image in an IR focal plane (PFir) of the telescope, in which the IR detector (Dir) is placed, the forms and positions of the third and fourth IR mirrors being defined using generalized Korsch equations with 4 mirrors with the constraint of the first and second mirrors (M1, M2) common with the visible channel,

   the telescope being capable of simultaneously producing a visible image on the visible detector and an infrared image on the IR detector.

2. Telescope according to claim 1, wherein the third and fourth IR mirrors each have a nonzero tilt angle (t3, t4) with respect to the optical axis (O), the third and fourth mirrors furthermore being configured to compensate for the aberrations introduced by said tilt angles.

3. Telescope according to claim 2, wherein the aberrations introduced by said tilt comprise at least astigmatism and coma.

4. Telescope according to one of claims 2 and 3, wherein said tilt angle (t3, t4) of each of the third and fourth mirrors is comprised between 3° and 45°.

5. Telescope according to one of claims 2 to 4, comprising another visible channel having first and second mirrors in common with the initial visible channel, an additional third mirror having characteristics identical to those of the third mirror of the initial visible channel and an additional visible detector, both visible channels having a symmetrically field off-axis which is symmetrical with respect to the optical axis.

6. Telescope according to claim 1, wherein the infrared channel is furthermore configured to have a field off-axis (OffAir).

7. Telescope according to claim 6, wherein said field off-axis is comprised between 0.2° and 2°.

8. Telescope according to one of the preceding claims, wherein the third mirror is convex and the fourth mirror is concave.

9. Telescope according to one of the preceding claims, wherein the infrared channel has an IR focal length (Fir) and an exit pupil (Psir) and wherein the third and fourth mirrors (M3ir, M4ir) are furthermore defined so that the distance between said exit pupil (PSir) of the infrared channel and the IR detector (Dir) is smaller than said IR focal length (Fir) divided by 10.

FIG.1

PSir

20

Dir

FIG.2

FIG.3

EP 3 667 395 B1

FIG.4

EP 3 667 395 B1

FIG.5

FIG.6

**EP 3 667 395 B1**

## RÉFÉRENCES CITÉES DANS LA DESCRIPTION

### Documents brevets cités dans la description

- EP 404463 A
- EP 3096169 A